# EUROPEAN PATENT APPLICATION

(11) **EP 2 079 003 A1**
(43) Date of publication of application: **15.07.2009**
(21) Application number: 08167927.6
(22) Date of filing: 30.10.2008
(51) Int. Cl.: G06F 1/32

(54) **Computer system and power-saving method thereof**

(30) Priority: 27.12.2007 TW 96150519
(71) Applicant: ASUSTeK Computer Inc., Peitou, Taipei City (TW)
(72) Inventor: Wang, Chien-Chin, 112, Taipei City (TW); Wu, Chao-Chung, 112, Taipei City (TW)
(74) Representative: Viering, Jentschura & Partner

(57) **Abstract**

The present invention relates to a computer system (1; 1a) and a power-saving method thereof. The computer system (1; 1a) comprises a slot (22a; 22b; 22c), a switch set (24a; 24b; 24c), and a controlling module (30). An expansion card (10a; 10b; 10c) is capable of inserting into the slot (22a; 22b; 22c). The switch set (24a; 24b; 24c) controls transmission of a power, a clock, and a bus signal to the slot (22a; 22b; 22c). When activating a power-saving operation, the controlling module (30) is capable of sending a controlling signal to command the switch set (24a; 24b; 24c) to cut off transmission of power, the clock, and the bus signal to the slot (22a; 22b; 22c).

## Description

### BACKGROUND OF THE INVENTION

### 1. Field of the Invention

The present invention relates to a computer system and a power-saving method thereof, and more particularly, the present invention relates to a computer system having a plurality of expansion cards and a power-saving method thereof.

### 2. Description of the Related Art

As graphic processing techniques keep improving, more and more graphic application programs and computer games require a more powerful display card. Therefore, a computer system with a plurality of display cards is developed to meet the above requirement. For a computer system having a plurality of display cards, the power and related signals are continually provided to the display cards during the operation of the computer system. When the computer system only needs one display card to finish the task or handle a light load, it will waste power if the power and related signals are still fed to the other display cards, which are idle. The prior art provides a power-saving method that uses software to turn off the idle display card functionally to save power. But real testing has shown that the above method just functionally turns off the hardware, which cannot save power effectively.

Therefore, the present invention provides a solution to solve the problems of the prior art.

### SUMMARY OF THE INVENTION

It is therefore an object of the present invention to provide a computer system having a plurality of expansion cards and a power-saving method thereof, in order to save power by cutting off a power, a clock, and a bus signal to an idle expansion card.

To achieve the object mentioned above, the computer system of the present invention comprises a slot, a switch set, and a controlling module. The slot is capable of inserting an expansion card. The switch set controls transmission of a power, a clock, and a bus signal to the slot. The controlling module is capable of sending a controlling signal to control the switch set to cut off the power, the clock, and the bus signal transmitted to the slot when a power-saving operation is activated. Accordingly, the power, the clock, and the bus signal to the idle expansion card can be cut off to save power effectively.

The power-saving method of the present invention is suitable for a computer system having a slot for inserting an expansion card, the method comprising: activating a power-saving operation; using the power-saving operation to cause a controlling module to send a controlling signal;; and cutting off transmission of a power, a clock, and the bus signal to the slot by a switch set according to the controlling signal.

Other objects, advantages, and novel features of the present invention will become more apparent from the following detailed description when taken in conjunction with the accompanying drawings.

### BRIEF DESCRIPTION OF THE DRAWINGS

These and other objects and advantages of the present invention will become apparent from the following description of the accompanying drawings, which disclose several embodiments of the present invention. It is to be understood that the drawings are to be used for purposes of illustration only, and not as a definition of the invention.

In the drawings, wherein similar reference numerals denote similar elements throughout the several views:
Fig. 1 is an illustration of one embodiment of a computer system of the present invention.
Fig. 2 is an illustration of another embodiment of a computer system of the present invention.
Fig. 3 is a flow chart of the power-saving method of the present invention.

### DETAILED DESCRIPTION OF THE PREFERRED EMBODIMENT

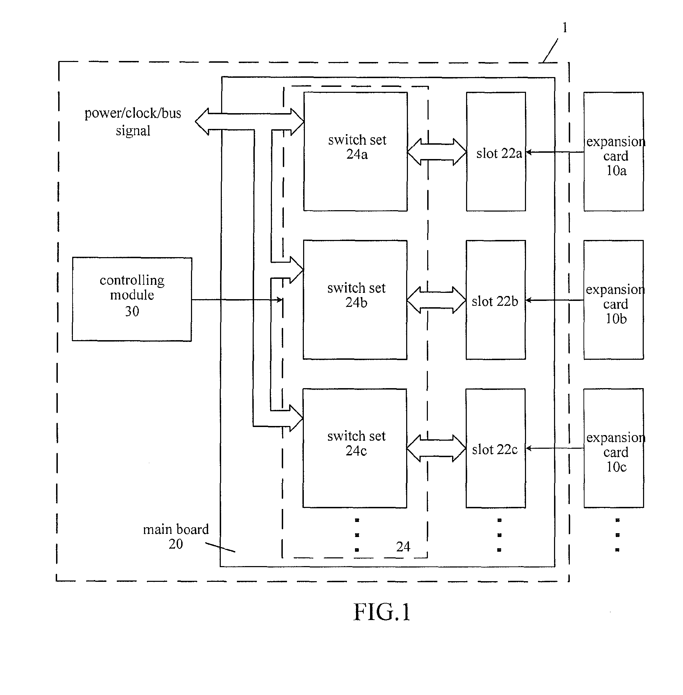

Please refer to Fig. 1. Fig. 1 is an illustration of one embodiment of a computer system of the present invention. As shown in Fig. 1, the computer system 1 comprises a main board 20 and a controlling module 30. The main board 20 comprises a plurality of slots 22a, 22b, 22c, and a switch set group 24. The switch set group 24 comprises a plurality of switch sets 24a, 24b, 24c. Each of the slots 22a, 22b, 22c is capable of inserting correspondingly expansion cards 10a, 10b, 10c. Each of the switch sets 24a, 24b, 24c is electrically connected to the corresponding slots 22a, 22b, 22c for controlling a plurality of signals (ex. power, clock, and bus signal) to transmit to the slots 22a, 22b, 22c. When a user activates a power-saving operation of the computer system 1, the controlling module 30 sends a controlling signal to the corresponding switch sets 24a, 24b, 24c to cut off the signals transmitted to the slots 22a, 22b, 22c.

In such a design, the controlling module 30 cuts off transmission of the power, the clock, and the bus signal to any or all expansion card(s) 10a, 10b, 10c in an idle state in order to save power. In this embodiment, the slots 22a, 22b, 22c can be PCI-Express slots. The PCI-Express slot can be a 1x, 2x, 4x, 8x, or 16x slot according to different requirements. In addition, the above expansion cards 10a, 10b, 10c can be a display card, a network card, a TV card, or a memory card for inserting into the slots 22a, 22b, 22c to execute related functions.

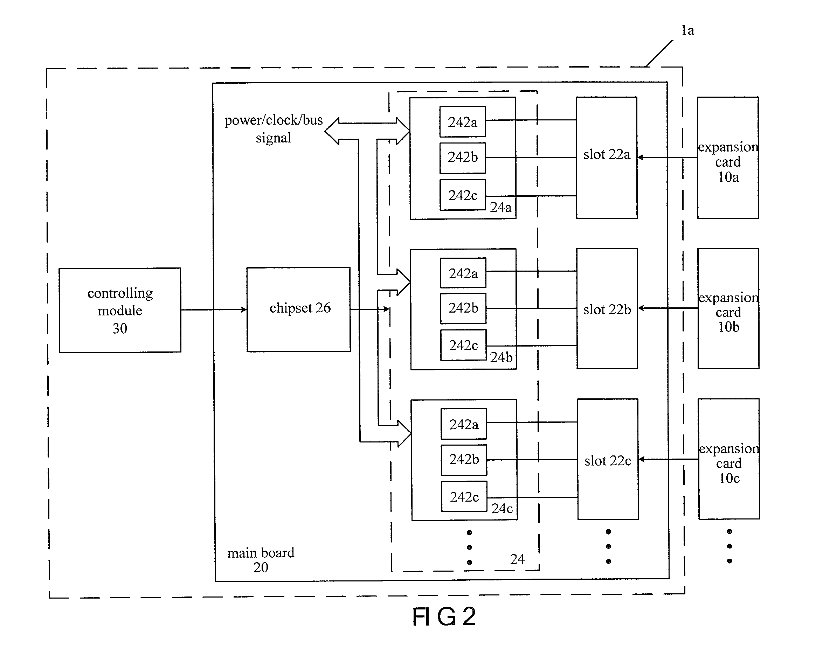

Please refer to Fig. 2. Fig. 2 is an illustration of another embodiment of a computer system of the present invention. As shown in Fig. 2, in this embodiment, the computer system 1a of the present invention further comprises a chipset 26 installed on the main board 20. The chipset 26 can receive the controlling signal from the controlling module 30 and send a command to the switch set group 24 according to the controlling signal. The switch set group 24 comprises at least one switch set 24a, 24b, or 24c. The chipset 26 can be commanded by the controlling signal to cut off the data transmission to some specific expansion card 10a, 10b, 10cto save power. The chipset 26 in turn sends the command to the corresponding switch set 24a, 24b, 24c via the GPIO (General Purpose Input/Output) pins in order to cut off transmission of the power, the clock, and the bus signal to the relevant slots 22a, 22b, 22c. The above arrangement can prevent operation errors of the computer system 1a; for example, if the computer system 1a directly commands the switch set 24a, 24b, 24c to cut off the signals, the chipset 26 will assume that the expansion cards 10a, 10b, 10c are still in a working state, and the chipset 26 will continue to send signals to control the expansion cards 10a, 10b, 10c. In addition, the switch sets 24a, 24b, 24c comprise a plurality of switches 242a, 242b, 242c for controlling the power, the clock, and the bus signal transmitted to the slots 22a, 22b, 22c respectively. When the expansion card 10a, 10b, 10c is in the working state, the power, the clock, and the bus signal are conducted to the slots 22a, 22b, 22c. When the power-saving operation is activated by operating the controlling module 30, the controlling module 30 will send out the controlling signal, and the plurality of switches 242a, 242b, 242c will respectively cut off transmission of the power, the clock, and the bus signal to the slots 22a, 22b, 22c according to the controlling signal. During the cut-off process, the clock and the bus signal can be cut off first, and the power can be cut off subsequently. The above cut-off sequence can prevent the computer system 1a from experiencing crashes or data processing errors in order to maintain the stability of the computer system 1a. The switches 242a, 242b, 242c can be some proper switch element according to the different circuit design, such as a MOS switch, a QSWITCH, etc., but it should be noted that the type of switch element is not limited by the above description.

In one embodiment of the present invention, the controlling module 30 of the computer system 1, 1a is application program for controlling the expansion cards 10a, 10b, 10c to save power. When trying to save power on some specific idle expansion card 10a, 10b, 10c, the user can operate the application program by pushing a button or inputting a command to activate the power-saving operation in order to send a control signal to the switch set 24a, 24b, 24c to cut off the power, the clock, and the bus signal of the corresponding slot 22a, 22b, 22c. Furthermore, the user can operate the application program to store the default settings of each of the slots 22a, 22b, 22c such that when the computer system 1, 1a power on, each slot 22a, 22b, 22c will remain in the conducting or cut-off state corresponding to the default settings. For example, the user can set single or plural slots 22a, 22b, 22c to be in the cut-off state every time the computer system 1, 1a power on.

In one embodiment of the present invention, the controlling module 30 of the computer system 1, 1a is a BIOS (Basic Input/Output System). In this embodiment, the power-saving function can be added to the BIOS of the computer system 1, 1a. When turning on the power of the computer system 1, 1a, the user can use a keyboard to go into the BIOS to select the power-saving function, and the user can set the chosen slot 22a, 22b, 22c in the cut-off state. After changing the BIOS setting and rebooting the computer system 1, 1a, the computer system 1, 1a will send out the controlling signal to the switch set 24a, 24b, 24c of the corresponding slot 22a, 22b, 22c according to the BIOS setting in order to cut off the power, the clock, and the bus signal. In addition, every time the computer system 1, 1a is turned on, each slot 22a, 22b, 22c will remain in the corresponding conducting or cut-off state according to the BIOS setting.

More particularly, the above application program and BIOS with the power-saving function can co-exist or exist individually in the computer system 1, 1a according to different requirements. When the application program and BIOS co-exist, the user can either use the BIOS to activate the power-saving operation for the expansion card 10a, 10b, 10c when the computer system 1, 1a is turned on, or use the application program to activate the power-saving operation after entering the operating system.

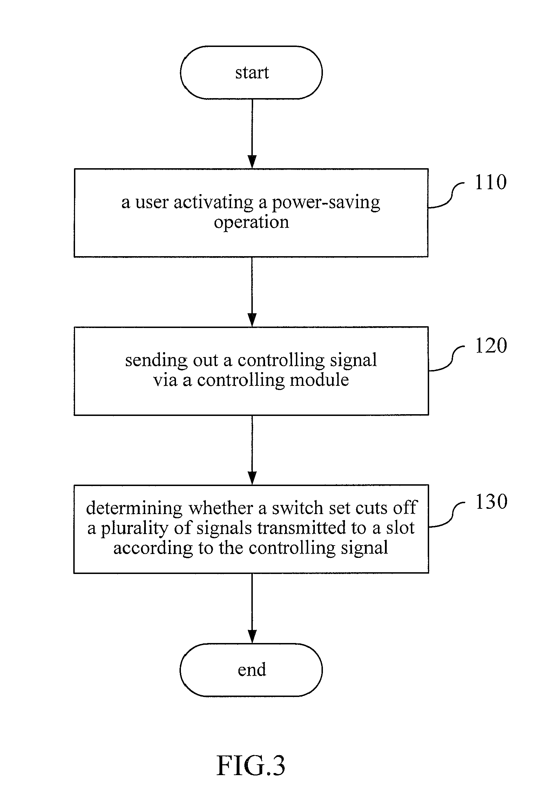

Please refer to Fig. 3. Fig. 3 is a flow chart of the power-saving method of the present invention. First, please refer to step 110: a user activating a power-saving operation. As shown in Fig. 1 and Fig. 2, the present invention first provides a computer system 1, 1a having at least one slot 22a, 22b, 22c corresponding to an expansion card 10a, 10b, 10c. The computer system 1, 1a further comprises a controlling module 30. The controlling module 30 can be application program or BIOS. When trying to cut off the expansion card 10a, 10b, 10c to save power, the user can activate the power-saving operation by operating the controlling module 30 by pushing a button or inputting a command.

Next, please refer to step 120: sending out a controlling signal via a controlling module. As shown in Fig. 1 and Fig. 2, after the user activates the power-saving operation, the controlling module 30 receives a command to save power on some specific expansion card 10a, 10b, 10c, and then sends out a controlling signal to the switch set 24a, 24b, 24c according to the command.

Finally, please refer to step 130: determining whether a switch set cuts off a plurality of signals transmitted to a slot according to the controlling signal. As shown in Fig. 1 and Fig. 2, the switch sets 24a, 24b, 24c can determine whether to cut off the signals according to the received controlling signal. When the controlling signal is a command to cut off the signals, the switch sets 24a, 24b, 24c cut off transmission of the plurality of signals to the slots 22a, 22b, 22c. The plurality of signals comprises the power, the clock, and the bus signal. As shown in Fig. 2, in one embodiment of the present invention, the switch sets 24a, 24b, 24c comprises a plurality of switches 242a, 242b, 242c for controlling, respectively, the power, the clock, and the bus signal transmitted to the slots 22a, 22b, 22c. The above signals can be cut off by the plurality of switches 242a, 242b, 242c in order to save power.

Although the present invention has been explained in relation to its preferred embodiments, it is to be understood that many other possible modifications and variations can be made without departing from the spirit and scope of the invention as hereinafter claimed.

## Claims

1. A computer system capable of connecting to an expansion card, which is **characterized in that** comprising:
a slot for inserting the expansion card;
a switch set for controlling transmission of a power, a clock, and a bus signal to the slot; and
a controlling module for sending a controlling signal to command the switch set to cut off the power, the clock, and the bus signal transmitted to the slot when a power-saving operation is activated.

2. The computer system as claimed in claim 1, **characterized in that** the switch set comprises a plurality of switches for controlling transmission of the power, the clock, and the bus signal to the slot, respectively.

3. The computer system as claimed in claim 1, **characterized in that** the slot is a PCI-Express slot.

4. The computer system as claimed in claim 1, **characterized in that** the computer system further comprising a chipset for receiving the controlling signal from the controlling module in order to command the switch set to cut off transmission of the power, the clock, and the bus signal to the slot.

5. The computer system as claimed in claim 4, **characterized in that** the chipset controls the switch set via a GPIO (General Purpose Input/Output) pin in order to cut off transmission of the power, the clock, and the bus signal to the slot.

6. The computer system as claimed in claim 1, **characterized in that** the controlling module is a BIOS (Basic Input/Output System).

7. The computer system as claimed in claim 1, **characterized in that** the controlling module is application program.

8. The computer system as claimed in claim 1, **characterized in that** the expansion card is a display card, or a network card, or a TV card, or a memory card.

9. The computer system as claimed in claim 1, **characterized in that** the power-saving operation is activated by a user pushing a button.

10. The computer system as claimed in claim 1, **characterized in that** the power-saving operation is activated by a user inputting a command.

11. A power-saving method suitable for a computer system having a slot for inserting an expansion card, which is **characterized in that** the method comprising:
activating a power-saving operation;
using the power-saving operation to cause a controlling module to send a controlling signal; and
cutting off transmission of a power, a clock, and the bus signal to the slot by a switch set according to the controlling signal.

12. The power-saving method as claimed in claim 11, **characterized in that** the controlling module is a BIOS.

13. The power-saving method as claimed in claim 11, **characterized in that** the controlling module is application program.

14. The power-saving method as claimed in claim 11, **characterized in that** the power-saving operation is activated by a user pushing a button.

15. The power-saving method as claimed in claim 11, **characterized in that** the power-saving operation is activated by a user inputting a command.
